# EUROPÄISCHE PATENTSCHRIFT

(11) **EP 3 391 279 B1**
(45) Veröffentlichungstag und Bekanntmachung des Hinweises auf die Patenterteilung: **25.09.2019**
(21) Anmeldenummer: 16816240.2
(22) Anmeldetag: 12.12.2016
(51) Int. Cl.: G06F 21/79, G06F 12/06, G06F 12/14, G06F 13/16, G06F 21/62, G06F 21/85

(54) **MIKROCONTROLLERSYSTEM UND VERFAHREN ZUR KONTROLLE VON SPEICHERZUGRIFFEN IN EINEM MIKROCONTROLLERSYSTEM**
MICROCONTROLLER SYSTEM AND METHOD FOR CONTROLLING MEMORY ACCESS IN A MICROCONTROLLER SYSTEM
SYSTÈME DE MICROCONTRÔLEUR ET PROCÉDÉ DE COMMANDE DE L'ACCÈS MÉMOIRE DANS UN SYSTÈME DE MICROCONTRÔLEUR

(30) Priorität: 15.12.2015 WO PCT/EP2015/465564; 17.11.2016 DE 102016222691
(43) Veröffentlichungstag der Anmeldung: 24.10.2018
(73) Patentinhaber: Continental Teves AG & Co. OHG, 60488 Frankfurt am Main (DE)
(72) Erfinder: NISTOR, Flaviu Constantin, 550246 Sibiu (RO)
(86) Internationale Anmeldenummer: PCT/EP2016/080649
(87) Internationale Veröffentlichungsnummer: WO 2017/102655

(56) Entgegenhaltungen:
- US-A1- 2003 200 451
- US-A1- 2010 005 213

## Beschreibung

Die vorliegende Erfindung betrifft ein Mikrocontrollersystem gemäß Oberbegriff von Anspruch 1 und ein Verfahren zur Kontrolle von Speicherzugriffen in einem Mikrocontrollersystem gemäß Anspruch 12.

Häufig sind Mehrkern-Mikrocontrollersysteme in der Weise realisiert, dass alle vorhandenen Kerne auf dieselben Ressourcen, z.B. Speicher oder Peripherie, zugreifen können. Für die Realisierung der Zugriffskontrolle auf spezifische Speicherbereiche bzw. Peripherien ist üblicherweise eine Speicherverwaltungseinheit, sog. "Memory Management Unit" (MMU) oder "Memory Protection Unit" (MPU) oder "System Memory Protection Unit" (SMPU), vorgesehen, mittels derer eine Speicherzugriffskontrolle für auf den Kernen ausgeführte Applikationen vorgenommen werden kann. Aus Gründen der Sicherheit ("safety") besitzt dabei lediglich ein dafür vorgesehener Hauptkern Schreibrechte für Register der Speicherverwaltungseinheit, um die Zugriffsberechtigung der Nebenkerne zu konfigurieren. Eine solche Einschränkung der Zugriffsberechtigung für die Nebenkerne kann insbesondere mittels entsprechender Implementierung in Hardware realisiert sein. Beispielsweise werden durch den Hauptkern Basissoftware und sicherheitsrelevante (safety) Software ausgeführt und applikationsspezifische Software entsprechend durch die Nebenkerne.

Zum Beispiel können Informationen über blockierte Schreibzugriffe eines Nebenkerns auf für diesen Nebenkern für Schreibzugriffe nicht freigegebene Speicherbereiche bis zum Löschen der entsprechenden Flags in Fehlerregistern der Speicherverwaltungseinheit gespeichert werden. Anders als der Hauptkern können die Nebenkerne diese Flags nicht löschen, sodass die auf einen ersten blockierten Zugriff folgenden Zugriffe nicht erfasst werden und damit gegebenenfalls nützliche Informationen verloren gehen können, wenn beispielsweise im Falle eines blockierten Schreibzugriffs eine Protokollierung des Systemzustands erfolgt. Eine Autorisierung einer grundsätzlichen Schreibberechtigung der Nebenkerne für diese Fehlerregister ist häufig aus Gründen des Erhalts einer Sicherheitsanforderungsstufe der funktionalen Sicherheit des zugrundeliegenden Systems nicht möglich.

US20100005213A1 und US20030200451A1 zeigen jeweils eine Methode zum Routen von Datenanfragen in einem SOC- (System-on-Chip) Design. Mehrere Mastereinrichtungen können jeweils mehrere Prozessoren aufweisen. Es wird eine Brücke eingesetzt, welche die Anfragen über einen Bus zu Slaveeinheiten weitergibt. Die Slaveeinheiten verfügen über eine Bus-Kontrolleinheit, welche mit einem externen Speicher verbunden ist.

Aufgabe der Erfindung ist es, ein Mikrocontrollersystem bereitzustellen, mittels dem eine Integration von Softwaremodulen insbesondere mit hohem Ressourcenbedarf effektiver und effizienter realisiert werden kann.

Diese Aufgabe wird durch ein Mikrocontrollersystem gemäß Anspruch 1 und ein Verfahren gemäß Anspruch 12 gelöst.

Die Erfindung betrifft ein Mikrocontrollersystem umfassend einen Hauptkern und einen Nebenkern und einen Kommunikationsbus zur Übertragung von Daten und einen Datenspeicher zur Speicherung von Daten, wobei der Datenspeicher einen Speicherbereich aufweist, für welchen der Nebenkern zumindest keine Schreibrechte aufweist, und dass das Mikrocontrollersystem ein Speicherzugriffsmodul und einen Konfigurationsspeicherbereich umfasst, wobei in dem Konfigurationsspeicherbereich eine Konfiguration zur Autorisierung eines Schreibens von durch den Nebenkern bereitgestellten Daten in den Speicherbereich des Datenspeichers vorgesehen ist, wobei das Schreiben der Daten in den Speicherbereich des Datenspeichers durch das Speicherzugriffsmodul erfolgt. Vorzugsweise ist das Mikrocontrollersystem gemäß der Erfindung entsprechend ein Mehrkern-Mikrocontrollersystem bzw. ein Mehrkern-Mikroprozessorsystem, wobei die mehreren Kerne durch ein gemeinsames Schaltkreisgehäuse eingefasst sind und die Kerne sich auf einem gemeinsamen Substrat befinden. Die Begriffe Mehrkern-Mikroprozessorsystem und Mehrkern-Mikrocontrollersystem werden im Rahmen der Beschreibung der Erfindung synonym verwendet.

Durch die Konfiguration kann somit in vorteilhafter Weise festgelegt werden, durch welchen Nebenkern Änderungen zulässig sind, wobei der eigentliche Schreibvorgang durch das Speicherzugriffsmodul ausgeführt wird. Damit wird durch die Erfindung Mikrocontrollersystem eine verbesserte Anpassungsfähigkeit an sicherheitsbezogene Anforderungen bereitgestellt und außerdem können höchste Sicherheitsanforderungen erfüllt werden. Das Mikrocontrollersystem ist vorzugsweise in der Weise ausgestaltet, dass durch Hauptkern und Nebenkerne zur selben Zeit verschiedene Applikationen bzw. Softwaremodule ausgeführt werden können. Die erfindungsgemäße Lösung ermöglicht es für diese Fälle eine komplexe softwarebasierte Implementierung einer Datenflusssteuerung ("Handshake") zwischen verschiedenen Softwaremodulen zu vermeiden, die aufgrund der Ausführung auf dem Hauptkern und dem Nebenkern häufig zudem asynchron ausgeführt werden. Da das Schreiben von Daten unter Kontrolle des Hauptkerns jedoch ohne dessen aktive Beteiligung während des Schreibvorgangs erfolgt, kann durch die Erfindung somit in vorteilhafter Weise ein unverzügliches Aktualisieren von Daten in den Datenspeichern erreicht werden, sodass die Ausführung eines auf einem Nebenkern ausgeführten Softwaremoduls ohne Unterbrechung fortgesetzt werden kann.

Der Hauptkern besitzt uneingeschränkte Zugriffsrechte und der Nebenkern besitzt bevorzugt eingeschränkte Schreibzugriffsrechte auf den Konfigurationsspeicherbereich.
Entsprechend der Erfindung umfasst der Konfigurationsspeicherbereich zumindest ein Konfigurationssegment zur Konfiguration der Autorisierung des Nebenkerns. Entsprechend der Erfindung besitzt der Nebenkern Schreibzugriffsrechte für das Datenfeld und/oder das Speicherbedarfsfeld und keine Schreibzugriffsrechte zumindest für das Adressfeld und/oder das Identifikatorfeld und/oder das Maskierungsfeld.

Das Speicherzugriffsmodul und der Hauptkern sind dem Kommunikationsbus bevorzugt als Master zugeordnet. Bevorzugt besitzen das Speicherzugriffsmodul und der Hauptkern also Supervisor-Rechte in dem Mikrocontrollersystem, wodurch weitere an den Kommunikationsbus angebunden funktionelle Systemkomponenten, welche Schreibzugriffe des Hauptkerns zulassen, auch Schreibzugriffe des Speicherzugriffsmoduls akzeptieren.

Entsprechend einer vorteilhaften Ausführungsform der Erfindung ist die Konfiguration mittels des Hauptkerns in den Konfigurationsspeicherbereich speicherbar. Entsprechend ist der Hauptkern zweckmäßigerweise zur Bereitstellung der in dem Konfigurationsspeicherbereich gespeicherten Konfiguration ausgestaltet.

Das Mikrocontrollersystem ist bevorzugt in der Weise ausgestaltet, dass das Schreiben der Daten in den Speicherbereich des Datenspeichers durch Bereitstellung der Daten durch den Nebenkern auslösbar ist. Durch die Erfindung besteht für Nebenkerne, welche insbesondere zur Gewährleistung einer erforderlichen Sicherheitsstufe der funktionalen Sicherheit, z.B. gemäß ISO 26262, keine Schreibrechte auf bestimmte Datenspeicher aufweisen - mittels der Konfiguration unter Kontrolle des Hauptkerns - vorteilhafterweise eine Möglichkeit eine Änderung der in diesen Datenspeichern vorhandenen Daten auszulösen. Beispielsweise können Flags in den Registern einer Speicherverwaltungseinheit gelöscht werden, sodass auch die auf einen ersten blockierten Zugriff folgenden Zugriffe erfasst werden und damit gegebenenfalls nützliche Informationen erhalten werden können.

Das Konfigurationssegment weist bevorzugt ein Identifikatorfeld mit einem Identifikator zur Autorisierung des einen übereinstimmenden Identifikator aufweisenden Nebenkerns zum Schreiben von Daten in ein durch das Konfigurationssegment umfasstes Datenfeld auf, wobei der Nebenkern Schreibzugriffsrechte für das Datenfeld und keine Schreibzugriffsrechte für das Identifikatorfeld besitzt. Durch den mittels des entsprechenden Identifikators autorisierten Nebenkern ist das Schreiben der Daten in den Speicherbereich des Datenspeichers bevorzugt durch ein Schreiben zumindest der Daten in das Datenfeld des Konfigurationssegments auslösbar.

Das Speicherzugriffsmodul ist bei nicht übereinstimmenden Identifikatoren des Identifikatorfelds und Nebenkerns entsprechend einer bevorzugten Ausführungsform zum Blockieren eines Schreibzugriffs auf das Datenfeld ausgestaltet.

Vorzugsweise weist das Konfigurationssegment ein Speicherbedarfsfeld zur Speicherung eines Speicherbedarfs der durch den Nebenkern in das Datenfeld geschriebenen Daten auf, wobei der Nebenkern Schreibzugriffsrechte für das Speicherbedarfsfeld besitzt.

Das Konfigurationssegment umfasst bevorzugt ein Adressfeld zur Speicherung einer Adresse des Speicherbereichs des Datenspeichers, wobei der Nebenkern keine Schreibzugriffsrechte für das Adressfeld besitzt. Zweckmäßigerweise ist die in dem Adressfeld gespeicherte Adresse die Startadresse des Speicherbereichs.

Das Konfigurationssegment umfasst bevorzugt ein Maskierungsfeld zum Speichern einer Maskierung der durch den Nebenkern bereitgestellten Daten, wobei der Nebenkern keine Schreibzugriffsrechte für das Maskierungsfeld besitzt. In vorteilhafter Weise können die Daten mittels der in dem Maskierungsfeld gespeicherten Maskierung vor einem Speichern in dem Speicherbereich derart modifiziert werden, dass beispielsweise maskierte Bits nicht geändert werden.

Da der Hauptkern uneingeschränkte Zugriffsrechte auf den Konfigurationsspeicherbereich besitzt, besitzt dieser vorzugsweise für alle Felder des Konfigurationssegments Schreibrechte.

Entsprechend einer bevorzugten Weiterbildung der Erfindung ist der Hauptkern derart ausgestaltet, dass dieser ein Speichern der Konfiguration während oder im Anschluss an einen Neustart des Mikroprozessorsystems vornimmt. Die mittels des Hauptkerns gespeicherte Konfiguration umfasst bevorzugt den Identifikator in dem Identifikatorfeld und/oder die Adresse in dem Adressfeld und/oder die Maskierung in dem Maskierungsfeld.

Vorzugsweise ist zumindest eine Speicherverwaltungseinheit zur Realisierung einer Speicherzugriffskontrolle des Mikroprozessorsystems vorgesehen. Bevorzugt ist der Datenspeicher ein Register der Speicherverwaltungseinheit.

Das Speicherzugriffsmodul kann entsprechend einer bevorzugten Ausführungsform der Erfindung den Konfigurationsspeicherbereich umfassen. Zweckmäßigerweise kann das Speicherzugriffsmodul hierfür einen Konfigurationsdatenspeicher aufweisen. Als Konfigurationsspeicherbereich zur Speicherung der Konfiguration ist zweckmäßigerweise wenigstens ein Register des Speicherzugriffsmoduls vorgesehen.

Des Weiteren kann die Erfindung in vorteilhafter Weise zu wesentlichen Teilen in Hardware realisiert sein, wobei lediglich vergleichsweise einfache Software-Routinen vorgesehen werden können.

Ein Mikrocontrollersystem gemäß der Erfindung kann eine Mehrzahl an Hauptkernen und/oder eine Mehrzahl an Nebenkernen umfassen.

Das Mikrocontrollersystem ist bevorzugt derart ausgestaltet, dass dieses das erfindungsgemäße Verfahren ausführen kann.

Beispielsweise finden solche sicherheitsrelevanten Mikrocontrollersysteme in Bremssystemen von Fahrzeugen Verwendung.

Weiterhin betrifft die Erfindung ein Verfahren zur Kontrolle von Speicherzugriffen in einem Mikrocontrollersystem, bei dem zumindest ein Nebenkern keine Schreibrechte für einen Speicherbereich eines Datenspeichers zur Speicherung von Daten aufweist, und welches sich weiterhin dadurch auszeichnet, dass der Nebenkern Daten bereitstellt, welche in den Speicherbereich geschrieben werden sollen, wobei anhand einer in einem Konfigurationsspeicherbereich hinterlegten Konfiguration überprüft wird, ob eine Autorisierung zum Schreiben der bereitgestellten Daten in den Speicherbereich des Datenspeichers für den Nebenkern vorliegt, wobei bei vorliegender Autorisierung das Schreiben der Daten in den Speicherbereich des Datenspeichers mittels eines Speicherzugriffsmoduls erfolgt.

Vorzugsweise erfolgt das Auslösen der Änderungen in Service-Routinen von Ausnahmebehandlungen und/oder Interrupts.

Weitere bevorzugte Ausführungsformen ergeben sich aus der nachfolgenden Beschreibung von Ausführungsbeispielen an Hand von Figuren.

Das erfindungsgemäße Verfahren wird vorzugsweise auf einen Mikrocontollersystem gemäß der Erfindung ausgeführt.

Weitere bevorzugte Ausführungsformen ergeben sich aus der nachfolgenden Beschreibung von Ausführungsbeispielen an Hand von Figuren.

In schematischer Darstellung zeigen:
Fig. 1 ein Ausführungsbeispiel des erfindungsgemäßen Mikrocontrollersystems und
Fig. 2 ein beispielgemäßes in dem CSSB-Register CSSBreg hinterlegtes Konfigurationssegment 3 zur Konfiguration der Zugriffskontrolle dem Hauptkern CPU1 nebengeordneter Prozessorkerne CPU2 und CPU3.

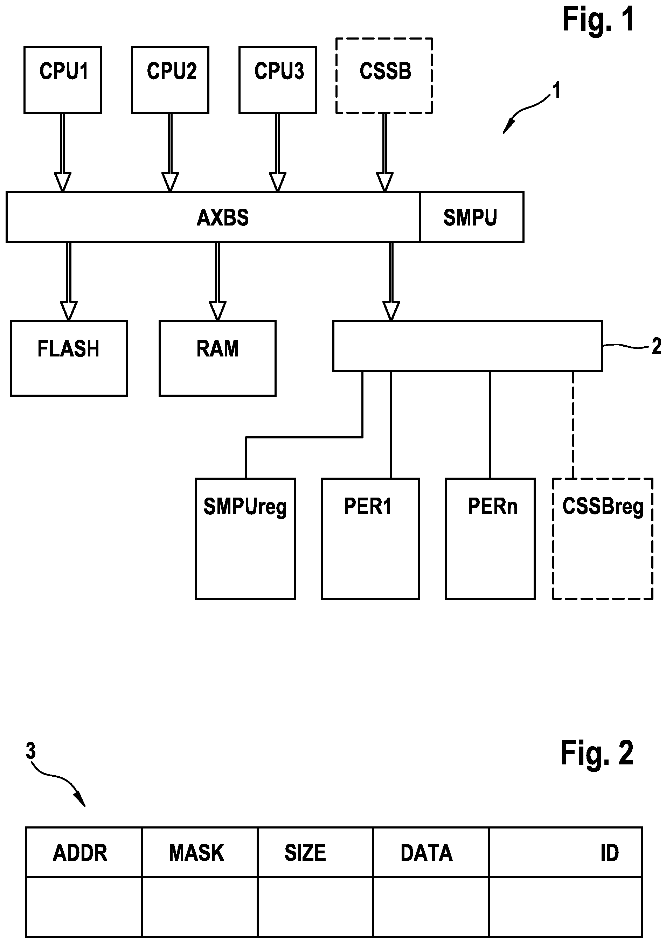

Die Fig. 1 zeigt eine schematische Darstellung eines Ausführungsbeispiels eines erfindungsgemäßen Mikroprozessorsystems 1, welches zusätzlich zu einem Hauptkern CPU1 und nebengeordneten Prozessorkernen CPU2 und CPU3 ein Speicherzugriffsmodul CSSB aufweist. Das Speicherzugriffsmodul CSSB ist, wie der Hauptkern CPU1 auch, als Master mit eigenem Master-Identifikator dem Kommunikationsbus AXBS zugeordnet. Speicherzugriffsmodul CSSB und Hauptkern CPU1 besitzt im System Supervisor-Rechte. Daraus resultiert, dass funktionelle Systemkomponenten, die Schreibzugriffe des Hauptkerns CPU1 zulassen, auch Schreibzugriffe des Speicherzugriffsmoduls CSSB akzeptieren. Weiterhin umfasst das beispielhaft dargestellte Mikroprozessorsystem 1 zumindest eine Speicherverwaltungseinheit SMPU zur Realisierung der Zugriffskontrolle auf einen Direktzugriffsspeicher RAM, einen nichtflüchtigen Speicher FLASH sowie über Peripheriebrücke 2 angebundene Register SMPUreg der Speicherverwaltungseinheit und weitere Peripheriebausteine Perl sowie Per2, wie zum Beispiel Zeitgeber oder A/D-Wandler.

Weiterhin über die Peripherieschnittstelle 2 an Kommunikationsbus AXBS angebunden, ist ein peripheres CSSB-Register CSSBreg, in welchem die Konfiguration der Zugriffsrechte der Nebenkerne CPU2, CPU3 abgespeichert wird. Ein Segment einer solchen Konfiguration ist in Fig. 2 dargestellt. Lediglich der Hauptkern CPU1 besitzt uneingeschränkte Schreibzugriffsberechtigung auf das periphere CSSB-Register CSSBreg, um die Konfiguration der Zugriffsrechte der Nebenkerne CPU2, CPU3 vorzunehmen. Die Nebenkerne CPU2, CPU3 besitzen keine uneingeschränkten Schreibzugriffsrechte auf das CSSB-Register CSSBreg. Die Nebenkerne besitzen keine Zugriffsberechtigung, insbesondere Schreibberechtigung, für die Felder ADDR, MASK und ID des Konfigurationssegments 3. Vorzugsweise erfolgen eine Aktivierung des CSSB und die Konfiguration der Zugriffsrechte durch den Hauptkern CPU1 während bzw. nach einem Neustart des Mikroprozessorsystems 1.

Das Speicherzugriffsmodul CSSB nimmt für einen im Konfigurationssegment 3 in Feld ID autorisierten Nebenkern CPU2, CPU3 mit ebendiesem Identifikator Schreiboperationen auf eine in Feld ADDR eingetragene Speicheradresse vor. Die auf die Speicheradresse zu schreibenden Daten werden durch einen jeweiligen Nebenkern CPU2, CPU3 bereitgestellt. Mittels des in Feld ID eingetragenen Identifikators ist der Nebenkern spezifiziert, der autorisiert ist diese Daten in das Feld DATA und den Speicherbedarf für diese Daten in das Feld SIZE eines Konfigurationssegments 3 des CSSB-Registers CSSBreg zu schreiben. Der Nebenkern CPU2, CPU3 mit dem in dem Feld ID hinterlegten Identifikator besitzt Schreibzugriffsrechte auf die Felder SIZE und DATA des CSSB-Registers CSSBreg. Der Zugriff eines Nebenkerns mit einer von der eingetragenen ID abweichenden ID wird entsprechend geblockt. Wenn der durch die Konfiguration spezifizierte Nebenkern CPU2, CPU3 dem Speicherzugriffsmodul CSSB Daten und den Speicherbedarf in den Feldern DATA und SIZE bereitgestellt hat, wird durch das Speicherzugriffsmodul CSSB eine Schreiboperation auf die in Feld ADDR spezifizierte Adresse ausgelöst. Ein Senden von Daten durch einen nicht autorisierten Busteilnehmer bzw. Nebenkern an das Speicherzugriffsmodul CSSB hat keine solche Schreiboperation zur Folge. In dieser Weise werden durch den Hauptkern nicht autorisierte Schreibvorgänge verhindert. Zweckmäßigerweise können die Nebenkerne solche Schreibvorgänge in Service-Routinen der Ausnahmebehandlungen oder in Interrupts auslösen.

Durch die Konfiguration bzw. ein spezifisches Konfigurationssegment 3 wird also festgelegt, an welcher Adresse (in Feld ADDR) eines Speichers durch welchen Bus-Teilnehmer, mit dem in Feld ID entsprechenden Identifikator, Änderungen zulässig sind, wobei der eigentliche Schreibvorgang durch Speicherzugriffsmodul CSSB ausgeführt wird. Bevorzugt ist eine der Anzahl der Schreibzugriffautorisierung entsprechende Anzahl an Konfigurationssegmenten 3 vorgesehen, um verschiedene Zugriffsmöglichkeiten zu erhalten.

Mittels des Feldes MASK kann der Hauptkern CPU1 die durch den jeweiligen Nebenkern CPU2, CPU3 bereitgestellten Daten in der Weise maskieren, dass beispielsweise lediglich bestimmte Bits an der in Feld ADDR hinterlegten Adresse geändert werden können. Die von einem Nebenkern CPU2, CPU3 dem Speicherzugriffsmodul CSSB bereitgestellten Daten werden durch das Speicherzugriffsmodul CSSB vor dem Schreibvorgang an die in Feld ADDR hinterlegte Adresse derart modifiziert, dass die maskierten Bits nicht geändert werden. Beispielsweise kann es gewünscht sein, dass ein mittels Nebenkern CPU2 ausgeführtes Softwaremodul über den CSSB lediglich Bit 5 der Adresse 0x200 ändern darf. In solchen Fällen kann mittels des Feldes MASK eine Maske angewendet werden, um sicherzustellen, dass die weiteren Bits an Adresse 0x200 durch die Schreiboperation nicht überschrieben werden.

Beispielsgemäß ist es mittels der Erfindung somit möglich, dass die Nebenkerne die Flags in Register SMPUreg der Speicherverwaltungseinheit SMPU zu löschen, wenn dies entsprechend der Konfiguration autorisiert ist. Somit können in vorteilhafter Weise die auf einen ersten blockierten Zugriff folgenden Zugriffe erfasst werden und damit gegebenenfalls nützliche Informationen erhalten werden. Die Erfindung ist dabei nicht auf die beispielsgemäß beschriebenen Schreibzugriffe auf Flags in Registern einer Speicherverwaltungseinheit begrenzt.

## Patentansprüche

1. Mikrocontrollersystem (1) umfassend einen Hauptkern (CPU1) und einen Nebenkern (CPU2, CPU3) und einen Kommunikationsbus (AXBS) zur Übertragung von Daten und einen Datenspeicher (RAM, FLASH, SMPUreg) zur Speicherung von Daten, wobei der Datenspeicher (RAM, FLASH, SMPUreg) einen Speicherbereich aufweist, für welchen der Nebenkern (CPU2, CPU3) zumindest keine Schreibrechte aufweist, wobei das Mikrocontrollersystem (1) ein Speicherzugriffsmodul (CSSB) und einen Konfigurationsspeicherbereich (CSSBreg) umfasst, wobei in dem Konfigurationsspeicherbereich (CSSBreg) eine Konfiguration zur Autorisierung eines Schreibens von durch den Nebenkern (CPU2, CPU3) bereitgestellten Daten in den Speicherbereich des Datenspeichers (RAM, FLASH, SMPUreg) vorgesehen ist, wobei das Schreiben der Daten in den Speicherbereich des Datenspeichers (RAM, FLASH, SMPUreg) durch das Speicherzugriffsmodul (CSSB) erfolgt, **dadurch gekennzeichnet, dass** der Hauptkern (CPU1) uneingeschränkte Zugriffsrechte und der Nebenkern (CPU2, CPU3) eingeschränkte Schreibzugriffsrechte auf den Konfigurationsspeicherbereich (CSSBreg) besitzt und der Konfigurationsspeicherbereich (CSSBreg) zumindest ein Konfigurationssegment (3) zur Konfiguration der Autorisierung des Nebenkerns (CPU2, CPU3) umfasst, das Konfigurationssegment ein Datenfeld, ein Speicherbedarfsfeld, ein Adressfeld, ein Identifikatorfeld und ein Maskierungsfeld umfasst, wobei der Nebenkern (CPU2, CPU3) Schreibzugriffsrechte für das Datenfeld (DATA) und/oder das Speicherbedarfsfeld (SIZE) des Konfigurationssegments (3) und keine Schreibzugriffsrechte für das Adressfeld (ADDR) und/oder das Identifikatorfeld (ID) und/oder das Maskierungsfeld (MASK) des Konfigurationssegments (3) besitzt.

2. Mikrocontrollersystem (1), gemäß einem der vorgehenden Ansprüche, **dadurch gekennzeichnet, dass** das Speicherzugriffsmodul (CSSB) und der Hauptkern (CPU1) dem Kommunikationsbus (AXBS) als Master zugeordnet sind.

3. Mikrocontrollersystem (1) gemäß wenigstens einem der vorhergehenden Ansprüche, **dadurch gekennzeichnet, dass** die Konfiguration mittels des Hauptkerns (CPU1) in den Konfigurationsspeicherbereich (CSSBreg) speicherbar ist.

4. Mikrocontrollersystem (1) gemäß wenigstens einem der vorhergehenden Ansprüche, **dadurch gekennzeichnet, dass** dieses in der Weise ausgestaltet ist, dass das Schreiben der Daten in den Speicherbereich des Datenspeichers (RAM, FLASH, SMPUreg) durch Bereitstellung der Daten durch den Nebenkern (CPU2, CPU3) auslösbar ist.

5. Mikrocontrollersystem (1) gemäß einem der vorhergehenden Ansprüche, **dadurch gekennzeichnet, dass** das Konfigurationssegment (3) das Identifikatorfeld mit einem Identifikator (ID) zur Autorisierung des einen übereinstimmenden Identifikator (ID) aufweisenden Nebenkerns (CPU2, CPU3) zum Schreiben von Daten in das durch das Konfigurationssegment (3) umfasstes Datenfeld (DATA) aufweist, wobei der Nebenkern (CPU2, CPU3) Schreibzugriffsrechte für das Datenfeld (DATA) und keine Schreibzugriffsrechte für das Identifikatorfeld (ID) besitzt.

6. Mikrocontrollersystem (1) gemäß Anspruch 5, **dadurch gekennzeichnet, dass** das Speicherzugriffsmodul (CSSB) bei nicht übereinstimmenden Identifikatoren (ID) des Identifikatorfelds und Nebenkerns (CPU2, CPU3) zum Blockieren eines Schreibzugriffs auf das Datenfeld (DATA) ausgestaltet ist.

7. Mikrocontrollersystem (1) gemäß einem der vorhergehenden Ansprüche, **dadurch gekennzeichnet, dass** das Konfigurationssegment (3) das Speicherbedarfsfeld (SIZE) zur Speicherung eines Speicherbedarfs der durch den Nebenkern (CPU2, CPU3) in das Datenfeld (DATA) geschriebenen Daten aufweist, wobei der Nebenkern (CPU2, CPU3) Schreibzugriffsrechte für das Speicherbedarfsfeld (SIZE) besitzt.

8. Mikrocontrollersystem (1) gemäß einem der vorhergehenden Ansprüche, **dadurch gekennzeichnet, dass** das Konfigurationssegment (3) das Adressfeld (ADDR) zur Speicherung einer Adresse des Speicherbereichs des Datenspeichers umfasst, wobei der Nebenkern (CPU2, CPU3) keine Schreibzugriffsrechte für das Adressfeld (ADDR) besitzt.

9. Mikrocontrollersystem (1) gemäß einem der vorhergehenden Ansprüche, **dadurch gekennzeichnet, dass** das Konfigurationssegment (3) das Maskierungsfeld (MASK) zum Speichern einer Maskierung der durch den Nebenkern (CPU2, CPU3) bereitgestellten Daten umfasst, wobei der Nebenkern (CPU2, CPU3) keine Schreibzugriffsrechte für das Maskierungsfeld (MASK) besitzt.

10. Mikrocontrollersystem (1) gemäß einem der vorhergehenden Ansprüche, **dadurch gekennzeichnet, dass** durch den mittels des entsprechenden Identifikators (ID) autorisierten Nebenkern (CPU2, CPU3) das Schreiben der Daten in den Speicherbereich des Datenspeichers (RAM, FLASH, SMPUreg) durch ein Schreiben zumindest der Daten in das Datenfeld (DATA) des Konfigurationssegments (3) auslösbar ist.

11. Mikrocontrollersystem (1) gemäß wenigstens einem der vorhergehenden Ansprüche, **dadurch gekennzeichnet, dass** der Hauptkern (CPU1) derart ausgestaltet ist, dass dieser ein Speichern der Konfiguration während oder im Anschluss an einen Neustart des Mikroprozessorsystems vornimmt.

12. Verfahren zur Kontrolle von Speicherzugriffen in einem Mikrocontrollersystem (1), bei dem zumindest ein Nebenkern (CPU2, CPU3) keine Schreibrechte für einen Speicherbereich eines Datenspeichers (RAM, FLASH, SMPUreg) zur Speicherung von Daten aufweist, wobei der Nebenkern (CPU2, CPU3) Daten bereitstellt, welche in den Speicherbereich geschrieben werden sollen, wobei anhand einer in einem Konfigurationsspeicherbereich (CSSBreg) hinterlegten Konfiguration überprüft wird, ob eine Autorisierung zum Schreiben der bereitgestellten Daten in den Speicherbereich des Datenspeichers (RAM, FLASH, SMPUreg) für den Nebenkern (CPU2, CPU3) vorliegt, wobei bei vorliegender Autorisierung das Schreiben der Daten in den Speicherbereich des Datenspeichers (RAM, FLASH, SMPUreg) mittels eines Speicherzugriffsmoduls (CSSB) erfolgt, **dadurch gekennzeichnet, dass** in dem Mikrocontrollersystem (1) der Hauptkern (CPU1) uneingeschränkte Zugriffsrechte und der Nebenkern (CPU2, CPU3) eingeschränkte Schreibzugriffsrechte auf den Konfigurationsspeicherbereich (CSSBreg) besitzt und der Konfigurationsspeicherbereich (CSSBreg) zumindest ein Konfigurationssegment (3) zur Konfiguration der Autorisierung des Nebenkerns (CPU2, CPU3) umfasst, das Konfigurationssegment ein Datenfeld, ein Speicherbedarfsfeld, ein Adressfeld, ein Identifikatorfeld und ein Maskierungsfeld umfasst, wobei der Nebenkern (CPU2, CPU3) Schreibzugriffsrechte für das Datenfeld (DATA) und/oder das Speicherbedarfsfeld (SIZE) des Konfigurationssegments (3) und keine Schreibzugriffsrechte für das Adressfeld (ADDR) und/oder das Identifikatorfeld (ID) und/oder das Maskierungsfeld (MASK) des Konfigurationssegments (3) besitzt.

## Claims

1. Microcontroller system (1) comprising a primary core (CPU1) and a secondary core (CPU2, CPU3) and a communication bus (AXBS) for transmitting data and a data memory (RAM, FLASH, SMPUreg) for storing data, wherein the data memory (RAM, FLASH, SMPUreg) has a memory area for which the secondary core (CPU2, CPU3) has at least no write rights, wherein the microcontroller system (1) comprises a memory access module (CSSB) and a configuration memory area (CSSBreg), wherein there is provision in the configuration memory area (CSSBreg) for a configuration for authorizing writing of data provided by the secondary core (CPU2, CPU3) to the memory area of the data memory (RAM, FLASH, SMPUreg), wherein the data are written to the memory area of the data memory (RAM, FLASH, SMPUreg) by the memory access module (CSSB), **characterized in that** the primary core (CPU1) has unlimited access rights and the secondary core (CPU2, CPU3) has limited write access rights to the configuration memory area (CSSBreg), and the configuration memory area (CSSBreg) comprises at least one configuration segment (3) for configuring the authorization of the secondary core (CPU2, CPU3), the configuration segment comprises a data field, a memory requirement field, an address field, an identifier field and a mask field, wherein the secondary core (CPU2, CPU3) has write access rights for the data field (DATA) and/or the memory requirement field (SIZE) of the configuration segment (3) and no write access rights for the address field (ADDR) and/or the identifier field (ID) and/or the mask field (MASK) of the configuration segment (3).

2. Microcontroller system (1) according to one of the preceding claims, **characterized in that** the memory access module (CSSB) and the primary core (CPU1) are associated with the communication bus (AXBS) as master.

3. Microcontroller system (1) according to at least either of the preceding claims, **characterized in that** the configuration is storable in the configuration memory area (CSSBreg) by means of the primary core (CPU1).

4. Microcontroller system (1) according to at least one of the preceding claims, **characterized in that** it is in a form such that the writing of the data to the memory area of the data memory (RAM, FLASH, SMPUreg) is triggerable by means of the data being provided by the secondary core (CPU2, CPU3).

5. Microcontroller system (1) according to one of the preceding claims, **characterized in that** the configuration segment (3) has the identifier field with an identifier (ID) for authorizing the secondary core (CPU2, CPU3) that has a concordant identifier (ID) to write data to the data field (DATA) that the configuration segment (3) comprises, wherein the secondary core (CPU2, CPU3) has write access rights for the data field (DATA) and no write access rights for the identifier field (ID).

6. Microcontroller system (1) according to Claim 5, **characterized in that** the memory access module (CSSB) is designed to block write access to the data field (DATA) in the event of non-concordant identifiers (ID) of the identifier field and secondary core (CPU2, CPU3).

7. Microcontroller system (1) according to one of the preceding claims, **characterized in that** the configuration segment (3) has the memory requirement field (SIZE) for storing a memory requirement of the data written to the data field (DATA) by the secondary core (CPU2, CPU3), wherein the secondary core (CPU2, CPU3) has write access rights for the memory requirement field (SIZE).

8. Microcontroller system (1) according to one of the preceding claims, **characterized in that** the configuration segment (3) comprises the address field (ADDR) for storing an address of the memory area of the data memory, wherein the secondary core (CPU2, CPU3) has no write access rights for the address field (ADDR).

9. Microcontroller system (1) according to one of the preceding claims, **characterized in that** the configuration segment (3) comprises the mask field (MASK) for storing a mask for the data provided by the secondary core (CPU2, CPU3), wherein the secondary core (CPU2, CPU3) has no write access rights for the mask field (MASK).

10. Microcontroller system (1) according to one of the preceding claims, **characterized in that** the writing of the data to the memory area of the data memory (RAM, FLASH, SMPUreg) is triggerable by the secondary core (CPU2, CPU3) authorized by means of the applicable identifier (ID) by virtue of at least the data being written to the data field (DATA) of the configuration segment (3).

11. Microcontroller system (1) according to at least one of the preceding claims, **characterized in that** the primary core (CPU1) is in a form such that it performs storage of the configuration during or following a restart of the microprocessor system.

12. Method for controlling memory access in a microcontroller system (1), in which at least one secondary core (CPU2, CPU3) has no write rights for a memory area of a data memory (RAM, FLASH, SMPUreg) for storing data, wherein the secondary core (CPU2, CPU3) provides data that are meant to be written to the memory area, wherein a configuration stored in a configuration memory area (CSSBreg) is used to check whether there is authorization for the secondary core (CPU2, CPU3) to write the provided data to the memory area of the data memory (RAM, FLASH, SMPUreg), wherein if there is authorization then the data are written to the memory area of the data memory (RAM, FLASH, SMPUreg) by means of a memory access module (CSSB), **characterized in that** the primary core (CPU1) in the microcontroller system (1) has unlimited access rights and the secondary core (CPU2, CPU3) has limited write access rights to the configuration memory area (CSSBreg), and the configuration memory area (CSSBreg) comprises at least one configuration segment (3) for configuring the authorization of the secondary core (CPU2, CPU3), the configuration segment comprises a data field, a memory requirement field, an address field, an identifier field and a mask field, wherein the secondary core (CPU2, CPU3) has write access rights for the data field (DATA) and/or the memory requirement field (SIZE) of the configuration segment (3) and no write access rights for the address field (ADDR) and/or the identifier field (ID) and/or the mask field (MASK) of the configuration segment (3).

## Revendications

1. Système de microcontrôleur (1) comprenant un coeur principal (CPU1) et un coeur secondaire (CPU2, CPU3) et un bus de communication (AXBS) destiné à transmettre des données et une mémoire de données (RAM, FLASH, SMPUreg) destinée à enregistrer des données, la mémoire de données (RAM, FLASH, SMPUreg) possédant une zone de mémoire pour laquelle le coeur secondaire (CPU2, CPU3) ne possède au moins aucun droit d'écriture, le système de microcontrôleur (1) comportant un module d'accès à la mémoire (CSSB) et une zone de mémoire de configuration (CSSBreg), une configuration destinée à autoriser un écriture de données mises à disposition par le coeur secondaire (CPU2, CPU3) dans la zone de mémoire de la mémoire de données (RAM, FLASH, SMPUreg) se trouvant dans la zone de mémoire de configuration (CSSBreg), l'écriture des données dans la zone de mémoire de la mémoire de données (RAM, FLASH, SMPUreg) étant effectuée par le module d'accès à la mémoire (CSSB), **caractérisé en ce que** le coeur principal (CPU1) possède des droits d'accès illimités et le coeur secondaire (CPU2, CPU3) des droits d'accès en écriture limités à la zone de mémoire de configuration (CSSBreg) et la zone de mémoire de configuration (CSSBreg) comporte au moins un segment de configuration (3) destiné à configurer l'autorisation du coeur secondaire (CPU2, CPU3), le segment de configuration comprend un champ de données, un champ de besoin en mémoire, un champ d'adresse, un champ d'identificateur et un champ de masquage, le coeur secondaire (CPU2, CPU3) possédant des droits d'accès en écriture pour le champ de données (DATA) et/ou le champ de besoin en mémoire (SIZE) du segment de configuration (3) et aucun droit d'accès en écriture pour le champ d'adresse (ADDR) et/ou le champ d'identificateur (ID) et/ou le champ de masquage (MASK) du segment de configuration (3).

2. Système de microcontrôleur (1) selon l'une des revendications précédentes, **caractérisé en ce que** le module d'accès à la mémoire (CSSB) et le coeur principal (CPU1) sont associés au bus de communication (AXBS) en tant que maîtres.

3. Système de microcontrôleur (1) selon au moins l'une des revendications précédentes, **caractérisé en ce que** la configuration peut être enregistrée dans la zone de mémoire de configuration (CSSBreg) au moyen du coeur principal (CPU1).

4. Système de microcontrôleur (1) selon au moins l'une des revendications précédentes, **caractérisé en ce que** celui-ci est configuré de telle sorte que l'écriture des données dans la zone de mémoire de la mémoire de données (RAM, FLASH, SMPUreg) peut être déclenchée par la mise à disposition des données par le coeur secondaire (CPU2, CPU3).

5. Système de microcontrôleur (1) selon l'une des revendications précédentes, **caractérisé en ce que** le segment de configuration (3) possède le champ d'identificateur avec un identificateur (ID) destiné à autoriser le coeur secondaire (CPU2, CPU3) qui possède un identificateur (ID) concordant à écrire des données dans le champ de données (DATA) compris par le segment de configuration (3), le coeur secondaire (CPU2, CPU3) possédant des droits d'accès en écriture pour le champ de données (DATA) et aucun droit d'accès en écriture pour le champ d'identificateur (ID).

6. Système de microcontrôleur (1) selon la revendication 5, **caractérisé en ce que** le module d'accès à la mémoire (CSSB) est configuré pour bloquer un accès en écriture au champ de données (DATA) en cas d'absence d'identificateurs (ID) concordants du champ d'identificateur et du coeur secondaire (CPU2, CPU3).

7. Système de microcontrôleur (1) selon l'une des revendications précédentes, **caractérisé en ce que** le segment de configuration (3) possède le champ de besoin en mémoire (SIZE) destiné à enregistrer un besoin en mémoire des données écrites par le coeur secondaire (CPU2, CPU3) dans le champ de données (DATA), le coeur secondaire (CPU2, CPU3) possédant des droits d'accès en écriture pour le champ de besoin en mémoire (SIZE).

8. Système de microcontrôleur (1) selon l'une des revendications précédentes, **caractérisé en ce que** le segment de configuration (3) possède le champ d'adresse (ADDR) destiné à enregistrer une adresse de la zone de mémoire de la mémoire de données, le coeur secondaire (CPU2, CPU3) ne possédant aucun droit d'accès en écriture pour le champ d'adresse (ADDR).

9. Système de microcontrôleur (1) selon l'une des revendications précédentes, **caractérisé en ce que** le segment de configuration (3) possède le champ de masquage (MASK) destiné à enregistrer un masquage des données mises à disposition par le coeur secondaire (CPU2, CPU3), le coeur secondaire (CPU2, CPU3) ne possédant aucun droit d'accès en écriture pour le champ de masquage (MASK).

10. Système de microcontrôleur (1) selon l'une des revendications précédentes, **caractérisé en ce que** l'écriture des données dans la zone de mémoire de la mémoire de données (RAM, FLASH, SMPUreg) par le coeur secondaire (CPU2, CPU3) autorisé par l'identificateur (ID) correspondant peut être déclenchée par une écriture d'au moins les données dans le champ de données (DATA) du segment de configuration (3).

11. Système de microcontrôleur (1) selon au moins l'une des revendications précédentes, **caractérisé en ce que** le coeur principal (CPU1) est configuré de telle sorte que celui-ci effectue un enregistrement de la configuration pendant ou à la suite d'un redémarrage du système de microprocesseur.

12. Procédé de contrôle des accès à la mémoire dans un système de microcontrôleur (1), selon lequel au moins un coeur secondaire (CPU2, CPU3) ne possède aucun droit d'écriture pour une zone de mémoire d'une mémoire de données (RAM, FLASH, SMPUreg) en vue de l'enregistrement de données, le coeur secondaire (CPU2, CPU3) mettant à disposition des données qui doivent être écrites dans la zone de mémoire, un contrôle étant effectué à l'aide d'une configuration stockée dans une zone de mémoire de configuration (CSSBreg) en vue de vérifier s'il existe pour le coeur secondaire (CPU2, CPU3) une autorisation d'écrire les données mises à disposition dans la zone de mémoire de la mémoire de données (RAM, FLASH, SMPUreg), l'écriture des données dans la zone de mémoire de la mémoire de données (RAM, FLASH, SMPUreg) étant effectuée, en présence de l'autorisation, au moyen d'un module d'accès à la mémoire (CSSB), **caractérisé en ce que** dans le système de microcontrôleur (1), le coeur principal (CPU1) possède des droits d'accès illimités et le coeur secondaire (CPU2, CPU3) des droits d'accès en écriture limités à la zone de mémoire de configuration (CSSBreg) et la zone de mémoire de configuration (CSSBreg) comporte au moins un segment de configuration (3) destiné à configurer l'autorisation du coeur secondaire (CPU2, CPU3), le segment de configuration comprend un champ de données, un champ de besoin en mémoire, un champ d'adresse, un champ d'identificateur et un champ de masquage, le coeur secondaire (CPU2, CPU3) possédant des droits d'accès en écriture pour le champ de données (DATA) et/ou le champ de besoin en mémoire (SIZE) du segment de configuration (3) et aucun droit d'accès en écriture pour le champ d'adresse (ADDR) et/ou le champ d'identificateur (ID) et/ou le champ de masquage (MASK) du segment de configuration (3).
